Europäisches Patentamt

European Patent Office

Office européen des brevets

(11) Publication number: **0 123 490**
**B1**

(12) **EUROPEAN PATENT SPECIFICATION**

(45) Date of publication of patent specification: **09.09.87**

(21) Application number: **84302576.8**

(22) Date of filing: **16.04.84**

(51) Int. Cl.⁴: **B 21 B 27/02, C 04 B 35/00**

(54) Rolls for rolling mills.

(30) Priority: **22.04.83 JP 69918/83**

(43) Date of publication of application:
**31.10.84 Bulletin 84/44**

(45) Publication of the grant of the patent:
**09.09.87 Bulletin 87/37**

(84) Designated Contracting States:
**DE SE**

(56) References cited:
**DE-A-2 449 874**
**DE-A-2 805 292**
**DE-A-2 936 940**
**DE-A-2 944 582**
**DE-A-3 141 590**
**US-A-2 005 315**
**US-A-3 143 012**
**US-A-3 318 124**
**US-A-3 577 619**
**US-A-3 842 471**
**US-A-4 284 687**

(73) Proprietor: **HITACHI, LTD.**
**6, Kanda Surugadai 4-chome Chiyoda-ku**
**Tokyo 100 (JP)**

(72) Inventor: **Sobue, Masahisa**
**433-75 Yonezawacho**
**Mito-shi (JP)**
Inventor: **Okada, Sensuke**
**2525-148 Mawatari**
**Katsuta-shi (JP)**
Inventor: **Akahori, Kimihiko**
**12-10 Sasanocho-3-chome**
**Katsuta-shi (JP)**
Inventor: **Kuniya, Keiichi**
**24-10 Nishinarusawacho-1-chome**
**Hitachi-shi (JP)**
Inventor: **Sasaki, Toshimi**
**2263-26 Horicho**
**Mito-shi (JP)**
Inventor: **Kajiwara, Toshiyuki**
**22-11 Kujicho-5-chome**
**Hitachi-shi (JP)**
Inventor: **Kimura, Tomoaki**
**6-8 Osecho-4-chome**
**Hitachi-shi (JP)**
Inventor: **Nihei, Mitsuo**
**4-16-3 Onumacho**
**Hitachi-shi (JP)**

Courier Press, Leamington Spa, England.

**0 123 490**

(58) References cited:

**SPRECHSAAL "Fachberichte", vol.116, no.3, 1983, Coburg Sprechsaal-Verlag; Dr.K.HUNOLD, Dr.H.KNOCH und Dr.A.LIPP, Kempten "Herstellungsverfahren und Eigenschaften von Siliciumcarbid-Formkörpern" pages 158, 160-162**

(74) Representative: **Paget, Hugh Charles Edward et al**
**MEWBURN ELLIS & CO. 2/3 Cursitor Street London EC4A 1BQ (GB)**

## Description

This invention relates to a work roll for rolling sheet in a rolling mill and to a method of rolling sheet using such a roll.

It is known that a work roll for a rolling mill may be made partly from ceramics in order to take advantage of the intrinsic high hardness and high wear resistance of ceramics. For instance, Japanese Patent Kokai (Laid-Open) No. 43862/74 discloses a three-layer structured composite roll for a rolling mill, which composite roll has as its outermost layer a ceramic ring. Also, U.S.—A—3,577,619 shows a composite roll made up of a core and a ceramic sleeve, which is designed to be used as a work roll for a rolling mill.

Similarly, German Offenlegungsschrift 2449874 discloses a roll for rolling rods in which a roll portion is formed of ceramics.

In these prior art rolls for rolling mills, however, ceramics are used only in a limited area on the roller surface. Above-mentioned Japanese Patent Kokai No. 43862/74 and US—A—3,577,619 disclose a grooved roll specified for rolling of wires or rods, but only a part of the roll adjacent to surface grooves is formed of ceramics. The other part of the roll surface is made of materials other than ceramics.

In these prior art disclosures, no account is given on what materials are used for the ceramics or how the ceramic ring is made.

There is much literature giving information on ceramics, but there is available little teaching or suggesting the application of ceramics to the rolls for rolling mills.

The present invention is set out in claim 1.

The term "of continuous cross-section" means that the sintered body has a solid cross-section, i.e. with no central bore.

The roll of this invention can provide a better sheet rolling performance than steel rolls.

By this invention it is possible to provide a roll for rolling mills which is suitable for forming a satin texture on the rolled sheet surface.

General aspects and embodiments of the invention are described below by way of example, with reference to the drawing, in which:—

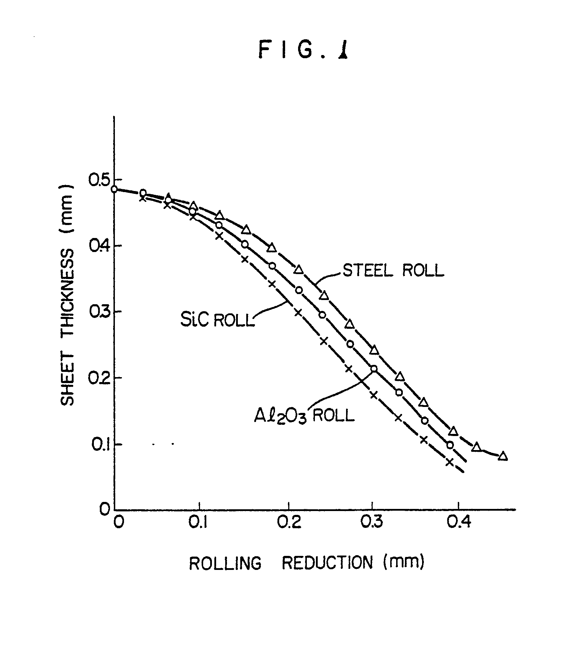

Fig. 1 is a characteristic diagram showing the relation between the thickness of a sheet to be rolled and the rolling reduction for various rolls.

The sintered body providing the rolling surface in the roll of this invention contains as its principal component at least one ceramic material selected from silicon carbide, silicon nitride, sialon, alumina and zirconia. The sintered body may be composed entirely of such ceramic material(s) or it may contain other substance(s). When other substance(s) is(are) present, it is desirable to regulate the content of such substance(s) so that the amount of said ceramic material(s) will account for 93% by weight or more of the whole sintered body.

Said other substances, for example, sintering aids and ceramic materials other than those named above may be present in the sintered body. These substances can be present in the starting material in the form of powder or fibre.

When alumina is used as the principal constituent, no sintering aid may be needed, but if inorganic powder other than alumina is used as the principal constituent, it is recommended to use a sintering aid. When, for instance, silicon carbide is used as the principal constituent, it is suggested to use alumina, boron, carbon or the like as the sintering aid.

In the case when silicon nitride is the principal component of the sintered body, one may preferably use magnesia, yttria, beryllia, alumina, aluminum nitride, silica and the like as the sintering aid.

When sialon is the principal component of the sintered body, aluminum nitride, yttria and the like may be used as the sintering aid.

When zirconia is employed as the principal component, it is desirable to use yttria as the sintering aid.

Use of carbon as the sintering aid can produce a satisfactory effect when it is mixed in the base composition in an amount of only about 0.5% by weight. In the case of other types of sintering aids, the desired effect can be provided by a content below 7% by weight. The ceramic materials other than said silicon carbide, silicon nitride, sialon, alumina and zirconia are generally excessively low in hardness in comparison with the above-named ones, so that if any of such ceramic materials (other than the above-named) is present, the resulting sintered body proves poor in hardness and the roll made of such a sintered body is found to be low in wear resistance. Accordingly it is preferred not to include such ceramic materials, but when such materials must be mixed in as a sintering aid, or for any other purpose it is desirable to confine their amount to the minimum requirement.

In view of these facts, it is desirable that at least one of silicon carbide, silicon nitride, sialon, alumina and zirconia constitutes the entirety or at least 93% by weight of the sintered body.

The surface of the sintered body is entirely non-metallic. No metal should be allowed to be exposed on the sintered body surface. Generally, metal is lower in hardness than ceramic, and if metal stays exposed on the roll surface, the surface hardness of the roll is liable to be variable. When such a roll is used for rolling, the metal-exposed portion suffers early wear. As a result, the rolled sheet develops a rugged surface, and the degree of such ruggedness is augmented as the rolling progresses.

The sintered body needs to have a relative density of not less than 96%, preferably not less than 97%

3

based on the theoretical density. The density of the sintered body is a critical factor for the strength and life of the roll. For instance, a whole-ceramic roll having a relative density of about 95% based on the theoretical is easily broken during rolling. By making the relative density of the sintered body greater than 96%, preferably greater than 97% based on the theoretical, it is possible to markedly increase the roll resistance to breaking or cracking under the expected rolling load.

The particle size of powdered starting materials, especially that of the ceramics used as the principal component, and the procedure for the preparation of the sintered body are important factors in achieving a density of the sintered body greater than 96% of the theoretical density. The particle size of the materials should be as small as possible. More specifically, it is usually desirable that said particle size is in the range 0.2 µm to 50 µm, most desirably not greater than 25 µm. However, a particle size smaller than 0.2 µm is undesirable, because in this case the powder particles tend to scatter in an atmosphere when the powder is mixed, and thus such a powder is hard to treat. If the powder particle size exceeds 50 µm, it becomes difficult to increase the density and also a high pressure is required when producing a sintered body. Further, when the powder particle size is greater than 50 µm, the produced sintered body proves to be much lower in strength, especially flexural strength, than when using the powder with a particle size smaller than 50 µm.

There is also noted a tendency that the smaller the particle size of the starting powder materials, the smaller is the particle size of the sintered body produced.

For producing a sintered body having a relative density not less than 96% based on the theoretical density, it is desirable in this invention to employ a pressure sintering method. As such a pressure sintering method, it is suggested to use, for example, a hot press method or a hot isostatic press (HIP) method. The hot press method is a method in which starting powder materials are mixed and moulded under normal pressure, and the moulding then placed in a die and heated to a required temperature in a mechanically pressed state, to thereby sinter the moulding.

A sintered body produced by this hot press method, which contains 95% by weight or more of silicon nitride with small quantities of alumina and yttria and which has a relative density greater than 97% based on the theoretical density, can have a flexural strength of about 100 Kgf/mm$^2$ at a temperature below 1,000°C.

In the HIP method, starting powder materials are mixed and preformed, and this preform is sintered by heating it to a determined temperature under a high pressure in an inert gas such as argon gas.

For instance, a sintered body made from silicon nitride as a principal component and yttria as a sintering aid by this HIP method has a density close to the theoretical density even if the amount of yttria is as small as 0.5% by weight.

When a sintered body is produced by said hot press or HIP method, it is possible to increase the density of the sintered body by elevating the sintering temperature, pressure and/or pressing time. Regarding the sintering temperature, for instance, when silicon nitride is used as a principal component, the density of the sintered body rises sharply, reaching close to the theoretical density, when the sintering is conducted at a temperature above 1,500°C.

A roll for rolling mills bends during use as it is used under a loaded condition. When the roll is used for hot rolling, it is also swollen due to its thermal expansion. When the roll is deformed, the rolled sheet becomes uneven in thickness along its width i.e. the thickness of the middle part of the sheet (along its width) becomes greater or smaller than that at both the ends. As a means for preventing such unevenness of rolled sheet thickness resulting from the deformation of the roll during the rolling operation, a crown is provided on the roll. Such crowns are known in the prior art, as disclosed for example in US—A—2005315, which is not however related to rolls formed of ceramics. In the present invention, there may be employed either a convex or a concave crown according to the situation involved. The initial crown adapted to the roll of this invention can be less than 300 µm whether it is convex or concave because the deformation that could occur on the roll of this invention due to thermal expansion is very small.

The sintered bodies of silicon carbide, silicon nitride, alumina and zirconia, when so worked as to have the theoretical density or a density close thereto, exhibit the properties shown in Table 1. For the purpose of comparison, the properties of steel and a sintered cermet composed of tungsten carbide powder and cobalt are also shown in Table 1.

0 123 490

TABLE 1

| Materials<br>Properties | Steel | WC-Co | SiC | $Si_3N_4$ | $Al_2O_3$ | $ZrO_2$ |
|---|---|---|---|---|---|---|
| Vickers hardness $(Kgf/mm^2)$ | 900 | 1,500 | 3,300 | 3,000 | 1,800 | 1,300—1,500 |
| Young's modulus $(Kgf/mm^2)$ | 21,000 | 60,000 | 40,000 | 30,000 | 37,000 | 15,000—20,000 |
| Coefficient of thermal expansion $(1/°C)$ | $10 \times 10^{-6}$ | $4.9 \times 10^{-6}$ | $4.2 \times 10^{-6}$ | $3.7 \times 10^{-6}$ | $7.9 \times 10^{-6}$ | $9—10.5 \times 10^{-6}$ |

The ceramic roll of this invention preferably has a Vickers hardness (Hv) of 1,300—3,500 Kgf/mm² on its surface, which is much higher than that of a steel roll. Owing to such high hardness, the roll suffers little wear and can be used semipermanently for rolling of stainless steel, soft steel, etc. The use of the roll of this invention may further provide the following effects. Since the whole surface of the roll of this invention is non-metallic, the roll is resistant to coalescence to a rolled sheet or adhesion of a rolled sheet. This results in an elongated working life of the roll. Further, even in the event of the occurrence of an abnormal situation such as slipping of the roll or rolling of a sheet with one part thereof lying on the other, coalescence of the metal sheet to the ceramic roll scarcely takes place, and hence the risk that the work roll causes such coalescence is small. Also, even if the work roll surface is heated to a high temperature of say 1,000°C, deterioration in quality of the roll is minimal because the texture stability of a ceramic material is much greater than that of iron and steel material.

The ceramic roll maintains its strength and high resistance to oxidization even at temperatures as high as 1,000°C, so that it shows excellent durability when it is used as a work roll for hot rolling.

The Young's moduli of the alumina, silicon carbide and silicon nitride sintered bodies are about 37,000, 40,000 and 30,000 Kgf/mm², respectively, which are approximately 1.5 to 2 times higher than that (about 21,000 Kgf/mm²) of iron and steel material.

Generally, use of a work roll with a large modulus of elasticity permits a reduction of the energy required for rolling and also rolling to a smaller thickness. Therefore, by using the ceramic roll of this invention as a work roll, it is possible to reduce the rolling energy and to improve the sheet rolling performance.

Use of a ceramic roll of the invention as a work roll and a steel roll as a back-up roll, can provide the following effects as compared with the case where a combination of ceramic roll is used. When ceramic rolls contact each other, the deformation at the contacting part is small in both the rolls, so that a high contact surface pressure is undesirably produced. However when a ceramic roll and a steel roll are in contact, a large deformation occurs of the steel roll having a lower modulus of elasticity, causing an increase of contact area and a corresponding decrease of pressure on the contact area. As a result, the roll reliability against spalling and other working defects is enhanced. When a ceramic roll is used in combination with a steel roll, the latter undergoes an elastic deformation in such a way that it is indented by the former, resulting in an increased coefficient of friction between both the rolls, which proves helpful for preventing the occurrence of slippage between the two rolls.

It is possible to construct the roll by sintering in such a manner that it is hard in the surface portion and soft in the inside. This can be attained, for example, by mixing a metal powder or fiber only in the area near the center of the roll when mixing the materials and performing the mixture into a roll. In this structure, although the roll surface is entirely non-metallic, metal is present in the inside, so that the inside portion of the roll becomes softer and more ductile than the surface portion. In the case of a roll of such integral structure, the thickness of the non-metallic material providing the rolling surface layer need not be greater than 3 mm.

A multiple-layer structure composite roll can be made by forming the surface layer from a ceramic material while forming the core with a cermet composed of a composite sintered body of tungsten carbide and cobalt.

The roll of this invention may be capable of rolling thin sheets, but for obtaining a sheet with a good gloss, the roll surface roughness should be less than 1 μm. The minimum thickness to which the work can be rolled is decided by the material quality of the roll. Generally, the greater the Young's modulus of a roll material, the less the thickness of a rolled sheet can be made. The ceramic roll of this invention preferably has a Young's modulus of 15,000 to 40,000 Kgf/mm², which is much greater than that of steel, and has,

5

**0 123 490**

therefore, excellent sheet rolling performance (capable of rolling a sheet to a very small thickness). Further, since the roll surface is entirely non-metallic, the rolled sheet has excellent surface smoothness. It is possible to further enhance the glossiness of the rolled sheet surface by regulating the roll surface roughness to less than 1 µm, preferably less than 0.4 µm.

There are the cases where it is desired to obtain a rolled sheet having a satin texture rather than a smooth and glossy surface. For instance, in the case of a metal sheet whose surface is to be plated for practical use, the sheet surface needs to be worked into a satin texture for good adhesion to metallic deposit. When the roll of this invention is so worked that its surface roughness will be 3 to 10 µm, especially 4 to 6 µm, it is capable of forming a satin texture best suited as a plating base. Further, since such surface roughness of the roll of this invention can be maintained in substantially the same state until the roll becomes unusable due to breakage or for other reasons, it is possible to form a satin texture of a constant shape and roughness on the rolled sheets from first to last. When a steel-made roll is used for forming a satin texture on the stainless steel sheets, the roller surface is worn flat after continuous 1,000-meter rolling work. This necessitates shifting down the mill even if the rolling work is not finished, and the work roll must either be replaced with new one or dismounted, subjected to a proper surface working such as shot blasting and then remounted in the mill. The time and cost required for such roll replacement or renewal is considered to be a major disadvantage of steel-made rolls. It is possible to eliminate such a problem which is inherent to the steel-made rolls, by using a roll according to the invention.

When the ceramic-made roll of this invention is used as a work roll, it is desirable to regulate its hardness in such a manner that the ratio of hardness (Vickers hardness) of the work roll (WR) to that of the back-up roll (BR) (WR hardness/BR hardness) is about 2 or higher. By so doing, it is possible to prevent the work roll from being damaged if alien matter such as, for example, oxide scale on a work (sheet to be rolled) or rollers is caught in between the work and back-up rolls. It was found that according to such roller design, any damage resulting from take-up of alien matter occurs on the back-up roll side, and the work roll side remains free from such damage. Thus, the use of the roll of this invention has eliminated the possibility that damage might be caused to the work roll by take-up of alien matter and transferred to the rolled sheet.

The Vickers hardness of steel is about 900 Kgf/mm$^2$ at highest even if alloy steel generally used for work rolls is taken into consideration. In contrast, the ceramic roll has a Vickers hardness above 1,300 Kgf/mm$^2$ even when it is made of a sintered body of zirconia which is lowest in hardness among the ceramic materials used in this invention. Therefore, it is possible to construct a four-high rolling mill by forming the back-up roll from steel of a suitable hardness while forming the work roll from ceramics and making the Vickers hardness of the work roll twice or more that of the back-up roll.

In the case where the work roll is formed from ceramics and the back-up roll from steel, it is desirable that the ceramic-made roll is designed as a simple round bar while the back-up roll, which has good machinability, is properly machined and provided with a driving shaft so that the back-up roll is rotated.

Example 1

Stainless steel SUS 304 was rolled using a roll made of a silcon carbide sintered body as a work roll and an alloy steel-made roll with a Vickers hardness of 900 Kgf/mm$^2$ as a back-up roll. The Vickers hardness of the work roll was about 3,300 Kgf/mm$^2$, approximately 2.7 times the hardness of the back-up roll. The sintered body contained 1% by weight of boron carbide and its relative density was 98% based on the theoretical density. It was made by hot pressing. The powdered materials used for making the sintered body had an average particle size of about 0.7 µm. The work roll was formed as a simple round bar and the back-up roll was provided with a driving shaft by machining and this back-up roll was rotated. The rolling mill in this example is so designed that when the back-up roll is rotated, the work roll is urged to rotate correspondingly by friction.

When alien matter such as iron oxide scale, steel chips and such was artificially put in between the work roll and back-up roll, dents were formed on the back-up roll but no flaw could be found on the work roll with the naked eye. In actual rolling of stainless steel plates, there was noted no transfer of flaws on the rolls onto the rolled sheet and it was possible to obtain the flawless rolled sheets.

Example 2

The same experiment as in Example 1 was conducted using a roll made of a silicon nitride sintered body as a work roll. The alien matter caught in between the two rolls gave dents on the back-up roll alone, and the work roll remained free of any flaw. The Vickers hardness of the silicon nitride sintered body was about 3,000 Kgf/mm$^2$.

The sintered body contained 2% by weight of yttria and 1% by weight of alumina as sintering aids. This sintered body was made by hot pressing and had a relative density of about 99% based on the theoretical density. The starting powdered materials were about 1 µm in average particle size.

Example 3

The experiment of Example 1 was carried out using as the work roll a roll made of an alumina sintered body having a Vickers hardness of about 1,800 Kgf/mm$^2$ and a density close to the theoretical density. The back-up roll suffered no dent due to take-in of alien matter.

6

The sintered body was made by hydrostatic press moulding, followed by sintering, and its relative density was 98.5% based on the theoretical density. The starting powder had a particle size of 3 μm.

Example 4

Rolling of a soft steel plate and an aluminum plate was carried out using a work roll made of a silicon carbide sintered body and a back-up roll made of alloy steel, the back-up roll being driven to rotate. The sheet rolling performance and the gloss of the rolled sheets were compared with those obtained when using a work roll made of steel.

The work roll made of a silicon carbide sintered body was a round bar of 50 mm in diameter and 150 mm in length with a Vickers hardness of about 3,300 Kgf/mm². The sintered body was composed of silicon carbide and a sintering aid. The sintering aid consisted of boron carbide (1% by weight). The sintered body was made by hot pressing using powdered materials with a particle size of 0.7 μm. Its relative density was about 98% based on the theoretical. The work roll was non-metallic in its entire structure. The modulus of elasticity of the ceramic was about 40,000 Kgf/mm². The surface roughness of the work roll was about 0.6 μm.

The results of rolling showed almost no difference in gloss of the rolled sheet between the ceramic-made work roll and steel-made work roll, and in both cases the rolled sheets had a good glossy surface.

Fig. 1 shows the relation between rolled sheet thickness and rolling reduction when a soft steel plate was rolled. It will be seen that the ceramic-made work roll requires less rolling reduction than the steel-made work roll for obtaining a rolled sheet of a desired thickness.

As the rolling reduction increases the rolled sheet thickness naturally becomes smaller, but when the rolling reduction reaches a certain level, the rolled sheet thickness is no longer reduced even if the rolling reduction is further increased. In the case of a steel-made work roll, it is noted that the rolled sheet thickness reduces at an almost equal rate in accordance with the increase of rolling reduction until it reaches 0.4 mm, but when the rolling reduction exceeds 0.4 mm, the rate of reduction of rolled sheet thickness is diminished. This signifies that the thickness that can be reduced by rolling is close to its limit.

In the case of a ceramic-made work roll, a greater range of rolling reduction is allowed to be selected till reaching the rolling limit than in the case of a steel-made work roll. Thus, the ceramic-made work roll has higher sheet rolling performance.

Example 5

A soft steel plate, an aluminum plate and a stainless steel plate were rolled using a work roll made of an alumina sintered body and an alloy steel-made back-up roll, said back-up roll being rotated. The sheet rolling performance and the surface glossiness of the rolled sheets were compared with those provided when using a steel-made work roll.

The work roll made of an alumina sintered body was a round bar measuring 50 mm in diameter and 150 mm in length and having a Vickers hardness of about 1,800 Kgf/mm². The sintered body contained no sintering aid and was substantially composed of alumina alone. It was made by moulding the powdered materials of 3 μm in particle size by hydrostatic press moulding and then sintering the moulding. The relative density of this alumina sintered body was 98.5% based on the theoretical density and the modulus of elasticity was about 37,000 Kgf/mm².

The optical micrographical examinations of the rolled sheets showed that all of the soft steel, aluminum and stainless steel sheets rolled using the alumina-made work roll had a flawless, surface, but the sheets rolled by using the steel-made work roll had many flaws on the surface. These flaws were like scratches made by a metal brush.

The soft steel plate rolling performance by the alumina-made work roll was as shown in Fig. 1, which indicates the higher sheet rolling performance of the alumina-made work roll than that of the steel-made work roll.

As described above, this invention has achieved an entirely ceramic-made roll for a rolling mill. The roller of this invention can be superior to a steel-made one in sheet rolling performance as well as in the ability to form a satin texture on the rolled sheet surface.

**Claims**

1. A work roll for rolling sheet in a rolling mill, having a rolling surface which is generally cylindrical and has an initial crown falling in the range of −300 μm to +300 μm characterized in that the rolling surface of the roll is provided by an entirely sintered body of continuous cross-section having as its principal constituent at least one of silicon carbide, silicon nitride, sialon, alumina and zirconia and having a relative density of at least 96% based on hye theoretical density, there being no metal exposed at the rolling surface.

2. A work roll according to claim 1, wherein the Vickers hardness of said sintered body is 1,300—3,500 Kgf/mm².

3. A work roll according to claim 1 or claim 2, wherein the Young's modulus of said sintered body is 15,000—40,000 Kgf/mm².

4. A work roll according to any one of claims 1 to 3, wherein said sintered body is substantially composed of only one of silicon carbide, silicon nitride, sialon, alumina and zirconia.

5. A work roll according to any one of claims 1 to 3, wherein said sintered body is composed of 93—99.5% by weight of at least one of silicon carbide, silicon nitride, sialon, alumina and zirconia, the balance being sintering aid.

6. A work roll according to any one of claims 1 to 5 wherein said sintered body is made with use of a powder of at least one of silicon carbide, silicon nitride, sialon, alumina and zirconia which has a particle size of 0.2—50 µm.

7. A work roll according to any one of the preceding claims possessing a surface roughness of 1 µm or less.

8. A work roll according to any one of claims 1 to 6 possessing a surface roughness of 3—10 µm.

9. A work roll according to any one of the preceding claims having an inside portion formed of material different from the material providing the rolling surface of the roll said different material having a higher bending strength than that of the material providing the rolling surface.

10. A work roll according to claim 9 wherein said inside portion is formed of a sintered ceramic and metal mixture.

11. A work roll according to claim 10, wherein the sintered material forming the rolling surface and the sintered material forming the inside portion of the roll are combined integrally with each other.

12. A work roll according to any one of claims 9 to 11 wherein the material providing the rolling surface has a thickness of 3 mm or above.

13. A method of rolling sheet using a work roll and a back-up roll, wherein the work roll is a roll according to any one of claims 1 to 12, and the back-up roll is of steel.

14. A method of rolling sheet according to claim 13, in which the Vickers hardness of the work roll is at least twice that of the back-up roll.


**Patentansprüche**

1. Arbeitswalze für ein Walzblech in einem Walzwerk mit einer Walzoberfläche, die im wesentlichen zylindrisch ist und eine Anfangsballigkeit besitzt, die in den Bereich von −300 µm bis +300 µm fällt, dadurch gekennzeichnet, daß die Walzoberfläche der Walze mit einem vollständig gesinterten Körper von kontinuierlichem Querschnitt versehen ist, dessen Hauptbestandteil wenigstens eines der Materialien Siliciumcarbid, Siliciumnitrid, Sialon, Aluminiumoxid und Zirkonoxid ist und der eine relative Dichte von wenigstens 96% bezogen auf die theoretische Dichte besitzt, wobei kein Metall an der Walzoberfläche freiliegt.

2. Arbeitswalze nach Anspruch 1, dadurch gekennzeichnet, daß die Vickers-Härte des Sinterkörpers 1 300 bis 3 500 Kgf/mm$^2$ beträgt.

3. Arbeitswalze nach Anspruch 1 oder 2, bei der der Elastizitätsmodul (Youngs-Modul) des Sinterkörpers 15 000 bis 40 000 Kgf/mm$^2$ beträgt.

4. Arbeitswalze nach einem der Ansprüche 1 bis 3, bei der der Sinterkörper im wesentlichen nur aus einem der Materialien Siliciumcarbid, Siliciumnitrid, Sialon, Aluminiumoxid und Zirkonoxid besteht.

5. Arbeitswalze nach einem der Ansprüche 1 bis 3, bei der der Sinterkörper aus 93 bis 99,5 Gew.-% von wenigstens einem der Materialien Siliciumcarbid, Siliciumnitrid, Sialon, Aluminiumoxid und Zirkonoxid besteht, wobei der Rest ein Sinterhilfsmittel ist.

6. Arbeitswalze nach einem der Ansprüche 1 bis 5, wobei der Sinterkörper unter Verwendung eines Pulvers von wenigstens einem der Materialien Siliciumcarbid, Siliciumnitrid, Sialon, Aluminiumoxid und Zirkonoxid mit einer Teilchengröße von 0,2 bis 50 µm hergestellt ist.

7. Arbeitswalze nach einem der vorangehenden Ansprüche mit einer Oberflächenrauhigkeit von 1 µm oder weniger.

8. Arbeitswalze nach einem der Ansprüche 1 bis 6 mit einer Oberflächenrauhigkeit von 3 bis 10 µm.

9. Arbeitswalze nach einem der vorangehenden Ansprüche mit einem Innenteil, das aus einem Material besteht, das verschieden ist von dem Material, das die Walzenoberfläche der Walze bildet, wobei dieses andere Material eine höhere Biegefestigkeit als das für die Walzoberfläche vorgesehene Material besitzt.

10. Arbeitswalze nach Anspruch 9, bei der der Innenteil aus einer Sinterkeramik und einer Metallmischung besteht.

11. Arbeitswalze nach Anspruch 10, bei der das die Walzoberfläche bildende Sintermaterial und das den Innenteil der Walze bildende Sintermaterial einstückig miteinander verbunden sind.

12. Arbeitswalze nach einem der Ansprüche 9 bis 11, bei der das für die Walzoberfläche vorgesehene Material eine Dicke von 3 mm oder mehr besitzt.

13. Verfahren zum Walzen eines Bleches unter Verwendung einer Arbeitswalze und einer Stützwalze, wobei die Arbeitswalze eine Walze nach einem der Ansprüche 1 bis 12 ist und die Stützwalze aus Stahl besteht.

14. Verfahren zum Walzen eines Bleches nach Anspruch 13, wobei die Vickers-Härte der Arbeitswalze wenigstens doppelt so groß ist wie bei der Stützwalze.

8

## 0 123 490

**Revendications**

1. Rouleau de travail pour laminer une feuille dans un laminoir, ayant une surface de laminage qui est généralement cylindrique et a un bombement initial compris entre $-300$ $\mu$m et $+300$ $\mu$m, caractérisé en ce que la surface de laminage du rouleau est formée d'un corps totalement fritté de section transversale continue ayant, comme constituant principal, au moins l'un parmi le carbure de silicium, le nitrure de silicium, le sialon, l'alumine et la zircone et ayant une densité relative d'au moins 96% en se basant sur la densité théoretique, sans métal exposé à la surface de laminage.

2. Rouleau de travail selon la revendication 1 où la dureté Vickers dudit corps fritté est 1.300—3.500 kgf/mm².

3. Rouleau de travail selon la revendication 1 ou la revendication 2 où la module de Young dudit corps fritté est de 15.000—40.000 kgf/mm².

4. Rouleau de travail selon l'une quelconque des revendications 1 à 3 où ledit corps fritté se compose sensiblement d'un seul du carbure de silicium, nitrure de silicium, sialon, alumine et zircone.

5. Rouleau de travail selon l'une quelconque des revendications 1 à 3 où ledit corps fritté se compose de 93—99,5% en poids d'au moins l'un parmi le carbure de silicium, le nitrure de silicium, le sialon, l'alumine et la zircone, le reste étant un auxiliaire de frittage.

6. Rouleau de travail selon l'une quelconque des revendications 1 à 5 où ledit corps fritté est formé en utilisant une poudre d'au moins l'un du carbure de silicium, nitrure de silicium, sialon, alumine et zircone qui a une dimension de particule de 0,2—50 $\mu$m.

7. Rouleau de travail selon l'une quelconque des revendications précédentes possédant une rugosité de surface de 1 $\mu$m ou moins.

8. Rouleau de travail selon l'une quelconque des revendications 1 à 6 possédant une rugosité de surface de 3—10 $\mu$m.

9. Rouleau de travail selon l'une quelconque des revendications précédentes ayant une portion interne formée en un matériau différent du matériau formant la surface de laminage du rouleau, ledit matériau différent ayant une résistance à la flexion plus importante que celle du matériau formant la surface de laminage.

10. Rouleau de travail selon la revendication 9 où ladite portion interne est formée d'un mélange fritté de céramique et de métal.

11. Rouleau de travail selon la revendication 10 où le matériau fritté formant la surface de laminage et le matériau fritté formant la portion interne du rouleau sont combinés l'un à l'autre.

12. Rouleau de travail selon l'une quelconque des revendications 9 à 11 où le matériau formant la surface de laminage a une épaisseur de 3 mm ou plus.

13. Procédé de laminage d'une feuille en utilisant un rouleau de travail et un rouleau d'appui, où le rouleau de travail est un rouleau selon l'une quelconque des revendications 1 à 12 et le rouleau d'appui est en acier.

14. Procédé de laminage d'une feuille selon la revendication 13 où la dureté Vickers du rouleau de travail est au moins le double de celle du rouleau d'appui.

# F I G . 1